# DEMANDE DE BREVET EUROPEEN

(11) **EP 0 842 599 A1**
(43) Date de publication de la demande: **20.05.1998**
(21) Numéro de dépôt: 97402721.1
(22) Date de dépôt: 14.11.1997
(51) Int. Cl.: A01G 9/02, A01G 9/04

(54) **Poterie d'horticulture**

(30) Priorité: 14.11.1996 FR 9613896
(71) Demandeur: Grigi, Bernard, 39570 Geruge (FR)
(72) Inventeur: Grigi, Bernard, 39570 Geruge (FR)
(74) Mandataire: Casalonga, Axel

(57) **Abrégé**

Poterie d'horticulture comprenant un pot (2) disposé au-dessus d'une soucoupe (3), le fond (5) du pot comprenant une partie creuse (10) en saillie vers le haut. Le fond (6) de la soucoupe (3) comprend une cheminée (21) en saillie vers le haut, engagée dans ladite partie en creux (10) du pot (2) et présentant au moins une ouverture par le dessous du fond de la soucoupe et une ouverture supérieure ; la paroi de ladite partie en creux du pot comprend, à distance du fond, au moins un passage (16) situé latéralement et à distance par rapport à l'ouverture supérieure de ladite cheminée (21) de la soucoupe (3) ; au moins un espace (19), formé entre ladite partie en creux du pot et ladite cheminée de la soucoupe, relie ledit passage (16) de ladite partie en creux du pot et le dessus du fond de la soucoupe. Ainsi, un trop-plein de liquide dans le pot peut s'écouler au travers dudit passage (16) et dudit espace (19) et être retenu dans la soucoupe (3) et l'intérieur ladite partie en creux (10) est aéré au travers de ladite cheminée de la soucoupe.

## Description

La présente invention concerne une poterie d'horticulture qui comprend un pot disposé au-dessus d'une soucoupe.

La poterie d'horticulture selon l'invention comprend un pot disposé au-dessus d'une soucoupe. Le fond du pot comprend une partie creuse en saillie vers le haut. Le fond de la soucoupe comprend une cheminée en saillie vers le haut, engagée à distance dans ladite partie en creux du pot de manière à former entre elles un espace communiquant avec le dessus du fond de la soucoupe et présentant au moins une ouverture par le dessous du fond de la soucoupe et une ouverture supérieure.

Selon l'invention, la paroi de ladite partie en creux du pot comprend, à distance du fond de ce dernier, au moins un passage situé latéralement et à distance par rapport à l'ouverture supérieure de ladite cheminée de la soucoupe, le bord inférieur de l'ouverture supérieure de ladite cheminée de la soucoupe étant situé au dessus du bord inférieur dudit passage de ladite partie creuse du pot, de telle sorte qu'un trop-plein de liquide dans le pot peut s'écouler au travers dudit passage et dudit espace, sans tomber dans la cheminée de la soucoupe et être retenu dans la soucoupe et que l'intérieur ladite partie en creux du pot est aéré au travers de ladite cheminée.

Ainsi, un trop-plein de liquide dans le pot peut s'écouler au travers dudit passage et dudit espace et être retenu dans la soucoupe. De plus, l'intérieur de ladite partie en creux du pot est aéré au travers de ladite cheminée de la soucoupe.

Selon l'invention, ladite partie en creux du pot peut avantageusement comprendre une paroi latérale dans laquelle est ménagé ledit passage ainsi qu'une paroi supérieure d'extrémité, ladite cheminée de la soucoupe comprenant alors une partie cylindrique ouverte par le dessous du fond de la soucoupe et dont l'ouverture supérieure est située en dessous de ladite paroi supérieure d'extrémité de ladite partie en creux du pot.

Selon l'invention, le pot et la soucoupe comprennent de préférence des moyens de liaison.

Selon une exécution préférée de l'invention, les moyens de liaison comprennent au moins un crochet porté par la soucoupe en venant en prise avec le bord inférieur dudit passage de ladite partie en creux du pot.

Selon l'invention, le fond de ladite soucoupe porte de préférence au moins un pied qui s'étend vers le haut et qui porte ledit crochet.

Selon l'invention, ladite partie en creux du pot peut avantageusement comprendre une portion tronconique susceptible d'occuper deux positions extrèmes opposées situées de part et d'autre d'un plan parallèle au fond du pot, de telle sorte que ledit passage de ladite partie en creux du pot est susceptible d'occuper deux positions de réglage vertical par rapport au fond du pot.

La présente invention sera mieux comprise à l'étude d'une poterie d'horticulture en matière plastique, comprenant un pot disposé au-dessus d'une soucoupe, décrite à titre d'exernple non limitatif et illustré par le dessin sur lequel :
- la figure 1. représente une coupe verticale médiane, en perspective, d'une poterie d'horticulture selon la présente invention ;
- la figure 2 représente une coupe horizontale partielle selon II-II de la poterie selon la figure 1 ;
- la figure 3 représente la poterie de la figure 1 dans une seconde position de réglage ;
- et la figure 4 représente la poterie de la figure 1 dans une troisième position de réglage.

La poterie d'horticulture représentée sur les figures et repérée d'une manière générale par la référence 1 comprend un pot 2 disposé au-dessus d'une soucoupe 3.

Le pot 2 comprend une paroi latérale 4 tronconique et un fond horizontal 5. La soucoupe 3 comprend un fond 6 et un rebord tronconique 7 qui s'étend vers le haut.

Le fond 5 du pot 2 présente, en-dessous, une multiplicité de lamelles en saillie 8 qui peuvent venir en appui sur le fond 6 de la soucoupe 3. Le fond 6 de la soucoupe 3 présente, en-dessous, une multiplicité de lamelles en saillie 9 qui peuvent venir en appui sur un support plan quelconque.

Dans sa partie centrale, le fond 5 du pot 2 présente une partie creuse 10 en saillie vers le haut qui comprend une paroi supérieure d'extrémité 11 horizontale, et une paroi latérale 12 qui comprend successivement, à partir du fond 5, une partie cylindrique 13, une partie tronconique intérieure 14 et une partie tronconique supérieure 15.

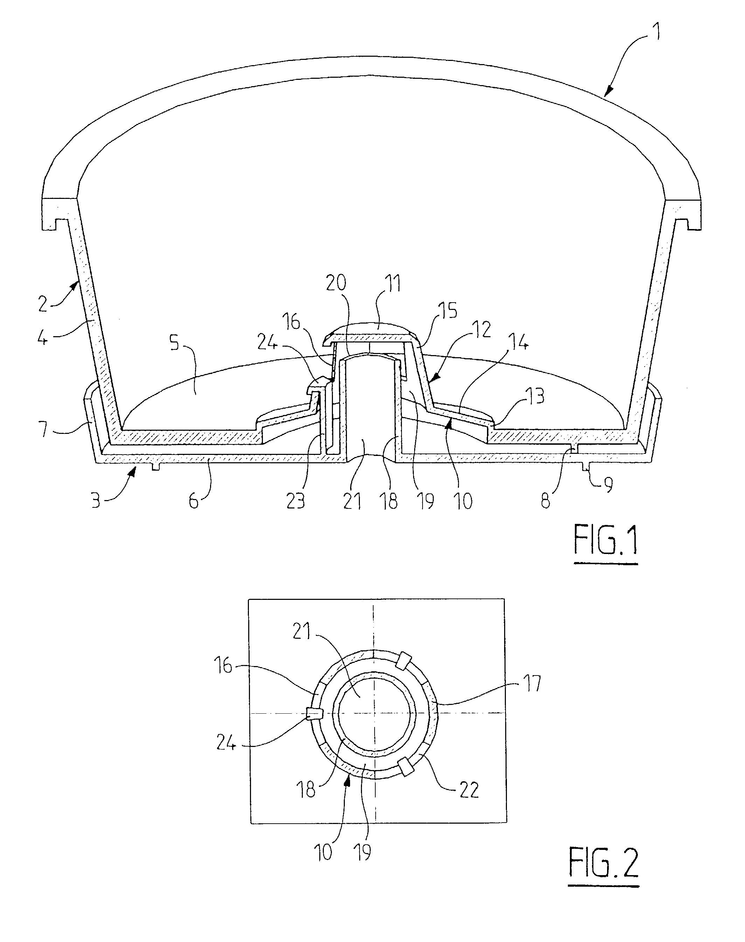

Dans une position haute de réglage visible sur la figure 1, la partie inférieure tronconique 14 est ouverte vers le bas et son angle au sommet est légèrement inférieur à 180°, par exemple égal à 150°, et la partie tronconique supérieure 15 est ouverte vers le bas, son angle au sommet étant légèrement supérieur à zéro, par exemple égal à 26°.

La partie tronconique supérieure 15 présente, en haut, trois passages 16 sensiblement de forme rectangulaire, situés à distance du fond 5. Cette partie 15 comprend trois bras 17 délimitant les passages 16 dans le sens périphérique. Ainsi, le pot 2 présente une réserve d'eau en dessous des passages 16.

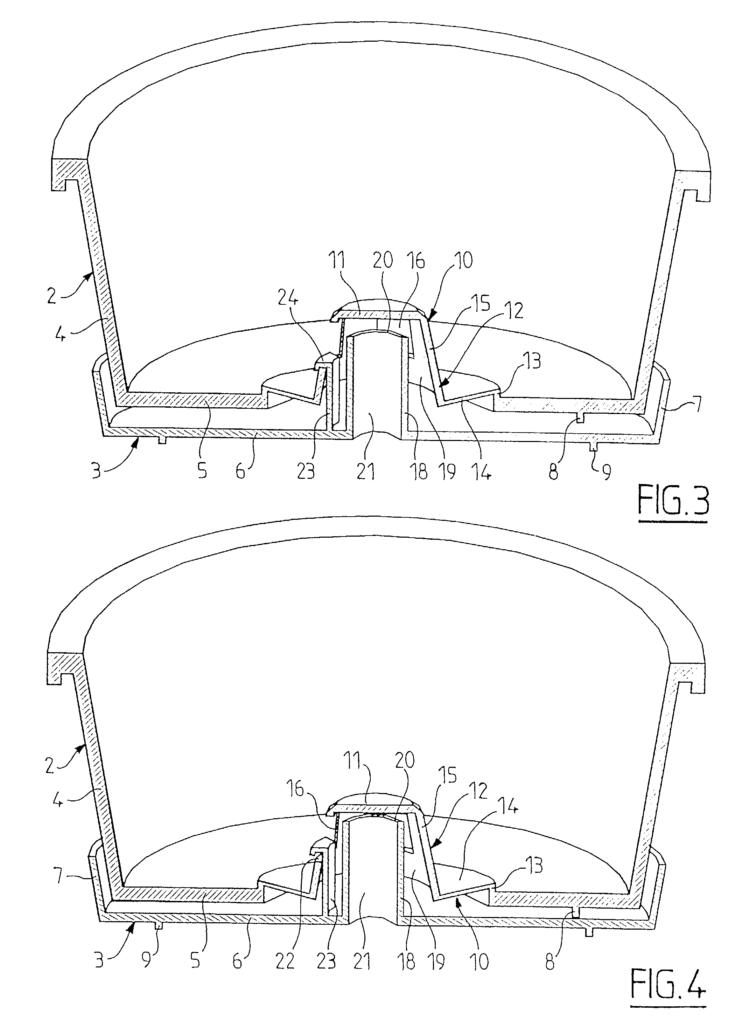

Si on appuie sur la paroi supérieure d'extrémité 11 de la partie en saillie 10 du pot 2, on peut déformer cette partie 10 vers le bas en faisant passer sa partie inférieure tronconique 14 dans la partie cylindrique 13, jusqu'à une position basse de réglage visible sur les figures 2 et 3, dans laquelle la partie intérieure tronconique 14 se trouve disposée à l'opposé de sa position représentée sur la figure 1, cette partie inférieure tronconique étant alors ouverte vers le haut.

Dans cette position basse de réglage, les passages 16 sont à une distance plus faible du fond 5 du pot 2 de telle sorte que la réserve d'eau dans le pot 1 présente un volume plus petit.

Le fond 6 de la soucoupe 3 comprend une partie cylindrique 18 en saillie vers le haut, qui est engagée dans la partie creuse 10 en ménageant un espace annulaire 19 avec sa paroi latérale 12 et un espace entre son bord supérieur 20 et sa paroi supérieure d'extrémité 11.

La partie cylindrique 18 détermine une cheminée 21 ouverte vers le bas au travers du fond 6 de la soucoupe 3 et ouverte vers le haut, complétement en-dessous de la paroi supérieure d'extrémité 11.

Ainsi, les passages 16 se trouvent formés latéralement et à distance de la partie cylindrique 18 formant la cheminée 21 et de l'ouverture supérieure de cette dernière, le bord supérieur 20 cle la partie cylindrique 18 étant disposé plus haut que le bord inférieur 22 des passages 16.

Le fond 6 de la soucoupe 3 présente, à la périphérie et à distance de la partie cylindrique 18, trois pieds verticaux 23 qui s'étendent vers le haut et qui présentent des crochets 24 en saillie vers l'extérieur. Pour le montage, on engage les pieds 23 dans l'espace 19 de la partie en saillie 10 du pot 2 jusqu'à ce que les crochets 24 viennent au-dessus des bords inférieurs 22 des passages 16 après avoir glissé sur la face intérieure de la partie tronconique 15.

Ainsi, la soucoupe 3 se trouve centrée horizontalement par rapport au pot 2 grâce aux pieds 23 et accrochée dans le sens vertical à ce dernier grâce aux crochets 24.

Dans la position haute représentée sur la figure 1 de la partie en saillie 10 du pot 2, les lamelles 8 du fond de ce pot 2 sont en appui sur le fond 6 de la soucoupe 3 et les crochets 24 sont en appui sur les bords inférieurs 22 des passages 16.

Dans la position basse représentée sur les figures 3 et 4 de la partie en saillie 10 du pot 2, la soucoupe 3 peut occuper deux positions verticales.

Dans le cas où le pot 2 est suspendu, la soucoupe 3 est écartée vers le bas, les crochets venant en appui sur les bords inférieurs 22 des passages 16. La soucoupe est alors suspendue au fond du pot 3. Cette position est représentée sur la figure 3.

Dans le cas où la soucoupe 3 est posée sur un support par l'intermédiaire des lamelles 9, le fond 5 du pot 2 est en appui sur le fond 6 de la soucoupe 3 par l'intermédiaire des lamelles 8, les crochets 24 étant alors à distance au dessus des bords inférieurs 22 des passages 16. Cette position est représentée sur la figure 4.

Lorsqu'un liquide d'arrosage introduit dans le pot 2 par le dessus arrive au niveau du bord inférieur 22 des passages 16 de la partie en saillie 10, dans l'une quelconque des positions décrites précédemment du pot 2 par rapport à la soucoupe 3, le trop plein de liquide s'écoule au travers des passages 16 et de l'espace 19, entre la paroi latérale 12 de la partie creuse 10 et la partie cylindrique 18 déterminant la cheminée 21, sans s'écouler au travers de cette dernière. Le trop-plein d'eau se déverse ainsi dans la soucoupe 3 qui constitue une retenue.

De plus, l'intérieur de la partie en saillie 10 du pot 2 est aéré au travers de la cheminée 21, ce qui permet d'aérer les racines et la terre dans le pot 2 au travers des passages 16 et de limiter les moisissures à l'intérieur de la partie creuse en saillie 10 du pot 2 et entre le fond du pot 2 et le fond de la soucoupe 3.

## Revendications

1. Poterie d'horticulture comprenant un pot (2) disposé au-dessus d'une soucoupe (3), le fond (5) du pot comprenant une partie creuse (10) en saillie vers le haut, le fond (6) de la soucoupe (3) comprenant une cheminée (21) en saillie vers le haut, engagée à distance dans ladite partie en creux (10) du pot (2) de manière à former entre elles un espace (19) communiquant avec le dessus du fond de la soucoupe et présentant au moins une ouverture par le dessous du fond de la soucoupe et une ouverture supérieure, caractérisée par le fait que la paroi de ladite partie en creux du pot comprend, à distance du fond de ce dernier, au moins un passage (16) situé latéralement et à distance par rapport à l'ouverture supérieure de ladite cheminée (21) de la soucoupe (3), le bord inférieur (20) de l'ouverture supérieure de ladite cheminée de la soucoupe étant situé au dessus du bord inférieur dudit passage de ladite partie creuse du pot, de telle sorte qu'un trop-plein de liquide dans le pot peut s'écouler au travers dudit passage (16) et dudit espace (19), sans tomber dans la cheminée de la soucoupe et être retenu dans la soucoupe (3) et que l'intérieur ladite partie en creux (10) du pot est aéré au travers de ladite cheminée.

2. Poterie selon la revendication 1, caractérisée par le fait que ladite partie en creux (10) du pot comprend une paroi latérale (12) dans laquelle est ménagé ledit passage (16) ainsi qu'une paroi supérieure (11) d'extrémité et que ladite cheminée (21) de la soucoupe comprend une partie cylindrique (18) ouverte par le dessous du fond de la soucoupe et dont l'ouverture supérieure est située en dessous de ladite paroi supérieure d'extrémité (11) de ladite partie en creux (10) du pot.

3. Poterie selon l'une des revendications 1 et 2, caractérisée par le fait que le pot et la soucoupe comprennent des moyens de liaison (24).

4. Poterie selon la revendication 3, caractérisée par le fait que les moyens de liaison comprennent au moins un crochet (24) porté par la soucoupe et venant en prise avec le bord inférieur (22) dudit passage (16) de ladite partie en creux (10) du pot.

5. Poterie selon la revendication 4, caractérisée par le fait que le fond de ladite soucoupe porte au moins un pied (23) qui s'étend vers le haut et qui porte ledit crochet (24).

6. Poterie selon l'une quelconque des revendications précédentes, caractérisée par le fait que ladite partie en creux (10) du pot comprend une portion tronconique (14) susceptible d'occuper deux positions extrêmes opposées situées de part et d'autre d'un plan parallèle au fond du pot, de telle sorte que ledit passage (16) de ladite partie en creux du pot est susceptible d'occuper deux positions de réglage vertical par rapport au fond (5) du pot.
